Europäisches Patentamt

European Patent Office

Office européen des brevets

(19)

(11) Publication number: **0 218 232**
B1

# EUROPEAN PATENT SPECIFICATION

(12)

(45) Date of publication of the patent specification:
31.01.90

(51) Int. Cl.⁴: **G01F 1/68**, G01P 5/12
// H01C3/00

(21) Application number: **86113872.5**

(22) Date of filing: **07.10.86**

(54) Hot wire air flow meter.

(30) Priority: **09.10.85 JP 223580/85**

(43) Date of publication of application:
**15.04.87 Bulletin 87/16**

(45) Publication of the grant of the patent:
**31.01.90 Bulletin 90/5**

(84) Designated Contracting States:
**DE FR GB**

(56) References cited:
**EP-A- 0 116 144**
**EP-A- 0 118 117**
**DD-A- 52 462**
**DE-A- 3 431 952**
**US-A- 4 228 683**

(73) Proprietor: **HITACHI, LTD., 6, Kanda Surugadai 4-chome**
**Chiyoda-ku, Tokyo(JP)**

(72) Inventor: **Takahashi, Minoru, 1367-4 Tabiko Katsuta-shi,**
**Ibaraki 312(JP)**
Inventor: **Tokuda, Hiroatsu, 16-10-13, Aoba-cho**
**Katsuta-shi, Ibaraki 312(JP)**
Inventor: **Suzuki, Tadao, 16-20, Mizuki-cho 1-chome**
**Hitachi-shi, Ibaraki 316(JP)**
Inventor: **Takada, Masumi, 1344-39 Tarazaki Katsuta-shi,**
**Ibaraki 312(JP)**
Inventor: **Kooriyama, Tsutomu, 3600-503 Nakane**
**Katsuta-shi, Ibaraki 312(JP)**

(74) Representative: **Patentanwälte Beetz sen. - Beetz jun.**
**Timpe - Siegfried - Schmitt-Fumian,**
**Steinsdorfstrasse 10, D-8000 München 22(DE)**

## Description

## BACKGROUND OF THE INVENTION

### (FIELD OF THE INVENTION)

The present invention relates to a hot wire air flow meter and a method of producing such a meter and, more particularly, to a hot wire air flow meter for detecting an amount of intake air of an internal combustion engine.

### (DESCRIPTION OF THE PRIOR ART)

It has previously been proposed to detect the amount of intake air being introduced to an internal combustion engine using a hot wire air flow meter having a bobbin. (EP-A 0 118 117).

The hot wire air flow meter having a bobbin constitutes a bobbin made of ceramics etc, a platinum wire as an exothermic resistor being wound in the coil form around the bobbin. A glass material member is overcoated the coiled platinum wire and lead wires are connected to the coiled platinum wire. Supporting member supports the bobbin and the glass coating member.

Quantities of heat for heating the bobbin of the hot wire air flow meter itself and also being transmitted to the supporting members via the bobbin and the lead wires cannot be neglected. For the existance of above those quantities of heat, a transient response characteristics against fluctuation of the amount of air flow has a tendency to delay. Because of the delay of the transient response characteristics, it has a fault that surging phenomenon occurs in an automobile at the conditions under the rapid acceleration and/or the rapid deceleration of the automobile.

Similar drawbacks arise also with a thermal air flow meter comprising an alumina pipe or bobbin having lead wires concentrically inserted into either end thereof and having a thin platinum wire wound around the outer circumference thereof (EP-A 1-0 116 144).

A hot wire air flow meter is installed generally to within a bypass air passage, which is bypassed with a main air passage of the internal combustion engine. The hot wire air flow meter being disposed within the bypass air passage has an excellent anti-pulsation characteristics or accurate detection of mean flow of pulsation flow and also anti-backfire characteristics or high shock-resistance against backfire phenomenon.

Besides, it has been known that a platinum wire of an air flow meter is stretched around within a main air passage. The platinum wire as the temperature sensitive resistor is held within the ring by the spacers in the form of a loop. (United States Patent No. 3,824,966).

However, if the air flow meter having such a loop-formed platinum wire shown in above United States Patent should apply to with the bypass air passage of the hot wire air flow meter, it would cause following faults. The space of the bypass air passage is smaller than that of the main air passage,so that the length of the platinum wire in the form of loop for such a by-pass would have to be unallowably short. Because of this shortness the electric resistance value of the air flow meter would be small, and an output characteristic of the air flow meter would be unreliable.

On the other hand a method is known for measuring the velocity of a liquid in a conduit comprising injecting a thermopulse of 5 to 100 ms into the liquid by means of a platinum wire in the form of a coil without a bobbin, detecting a pulse parameter at 5 to 500 mm downstream of said heater and converting it to a value equivalent to the velocity of said liquid (US-A 4 228 683).

## SUMMARY OF THE INVENTION

An object of the present invention is to provide a hot wire air flow meter wherein transient response characteristics under sudden change of an amount of air flow can be improved.

Another object of the present invention is to provide a hot wire air flow meter wherein carry-over time for final value can be improved.

Further object of the present invention is to provide a hot wire air flow meter wherein surging phenomenon can be decreased.

Still object of the present invention is to provide a hot wire air flow meter wherein an amount of heat conduction through supporting member can be reduced.

According to the invention said objects are achieved by a hot wire air flow meter comprising an exothermic resistor for measuring an amount of air flow disposed in a bypass air passage of a body, an electric circuit for supplying an electric current to said exothermic resistor and taking out a signal as an output voltage of said exothermic resistor in correspondence with an amount of air flow, and said exothermic resistor comprising a wire of, for example, platinum, in a form of coil, coated with a glass material on its outer surface, characterized in that the bobbin, on which said coil is wound, has been removed from said coil.

Said objects are also achieved, according to the invention, by a method of producing a hot wire air flow meter comprising an exothermic resistor for measuring an amount of air flow disposed in a bypass air passage of a body, and an electric circuit for supplying an electric current to said exothermic resistor and taking out a signal as an output voltage of said exothermic resistor in correspondence with an amount of air flow, said method comprising the steps of winding a wire of, for example, platinum in the form of coil on a bobbin, coating the outer surface of said coil with a glass material and baking the glass material, characterized by removing the bobbin by dissolving it with acid.

The exothermic resistor in the present invention is defined as a resistance element or a resistance probe, in which resistance value thereof has temperature dependence property.

In the hot wire air flow meter, such an exothermic resistor is used as air flow velocity measuring element and as air temperature measuring element. The air flow velocity measuring element is called generally a hot wire element or a hot wire sensor, and the air temperature measuring element is called generally a cold wire element or a cold wire sensor.

By the adapting the hot wire air flow meter free from a bobbin of the present invention, the quantity of heat generated on the coiled metal wire of the exothermic resistor hardly transmits through the supporting members or lead wires, and is carried away almost through air. Accordingly, the transient response characteristics, for example when the amount of air flow changes suddenly, can be improved drastically.

Since the outer surface of the coiled metal wire is overcoated by the glass material member, the hot wire air flow meter of the present invention can attain an excellent corrosion resistance. Both end sides of the coiled metal wire are wound at lap winding, the hot wire air flow meter free from a bobbin of the present invention can be improved an excellent mechanical strength.

## BRIEF DESCRIPTION OF DRAWINGS

Fig. 1 is a structural view of an exothermic resistor according to one embodiment of the present invention;

Figs. 2a, 2b, 2c, 2d and 2e show manufacturing diagrams of the exothermic resistor according to the order of manufacturing steps respectively;

Fig. 3 is a sectional view of a body for an internal combustion engine having a hot wire air flow meter of the invention;

Fig. 4 shows an electric driving circuit for the hot wire air flow meter; and

Fig. 5 shows response characteristics of the present invention and the prior art under two ways.

## DETAILED DESCRIPTION OF THE PREFERRED EMBODIMENTS

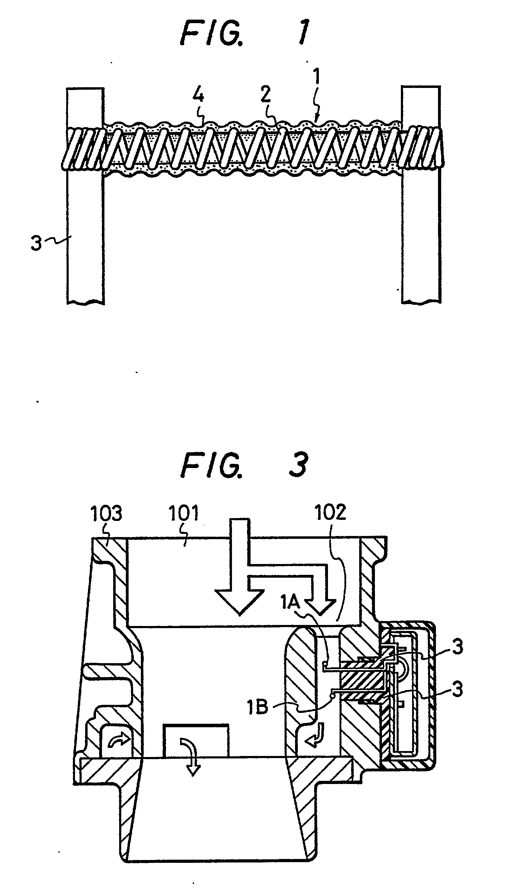

It will be explained below in detail a hot wire air flow meter according to one embodiment of the present invention. Fig. 1 shows a structural view of an exothermic resistor being utilized in a hot wire air flow meter.

An exothermic resistor 1 for detecting an amount of intake air flow has a platinum wire 2 in the form of a coil and has no bobbin therein. The coiled platinum wire 2 is in diameter about 20 µm and about 5 mm long. Both end sides of the coiled platinum wire 2 are welded to two supporting members 3, respectively. An outer surface of the coiled platinum wire 2 is overcoated almost in the cylindrical form with an inorganic glass material member 4 in the light of corrosion resistance and mechanical strength. Both end sides of the exothermic resistor 1 are not overcoated with the glass material member 4 and remains unovercoated and then are practiced under lap winding state in consideration of welding working with the supporting member 3.

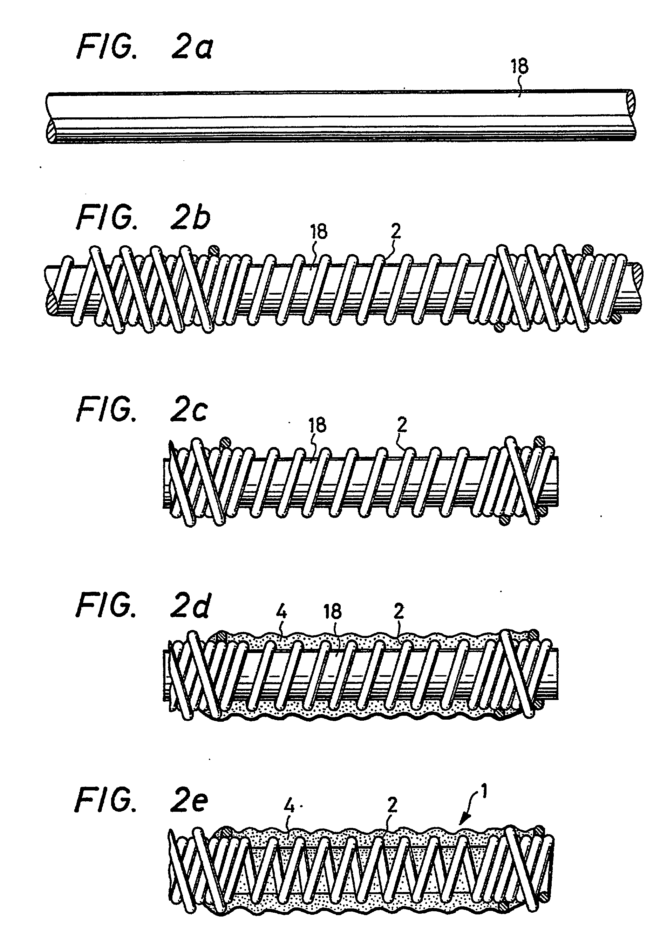

One example of a manufacturing method of the exothermic resistor 1 which is free from a bobbin will be explained as below according to Figs. 2a, 2b, 2c, 2d and 2e according to the order of manufacturing steps.

Fig. 2a shows a structural view of a core wire 18. The core wire 18 is made of a molybdenum wire in the form of straight and having an outer diameter about 0.5 mm. The molybdenum core wire 18 is used as a core wire for winding the platinum wire 2 on an outer surface thereof.

Fig. 2b shows a platinum wire 2 in combination with the core wire 18. The platinum wire 2 is wound continuously in plural pieces state with an outer surface of the molybdenum core wire 18 by means of a coil winding mechanism. At interval of about 5 mm, the platinum wire 2 is wound at close coiling state and also at lap winding state.

Fig. 2c shows one piece of the coiled platinum wire 2 being wound around on an outer surface of the molybdenum core wire 18. The single coiled platinum wire 2 in combination with the molybdenum core wire 18 is made by cutting the center of the lap winding portion at both ends and made out about 5 mm length.

Fig. 2d shows both the molybdenum core wire 18 and the coiled platinum wire 2 being overcoated and baked by the inorganic glass material member 4. The coiled platinum wire 2 is overcoated within the glass material member 4, except for both end sides thereof.

Fig. 2e shows the exothermic resistor 1 free from a bobbin. The exothermic resistor 1 is made out removing the molybdenum core wire 18 from the compound structure body shown in Fig. 2d using a mixed acid composed of a nitric acid and a sulfuric acid. Thus, the exothermic resistor 1 has no bobbin therein.

The exothermic resistor free from a bobbin 1 is welded with the supporting member 3 at both end sides thereof. The exothermic resistor 1 may be welded with lead wires and then the lead wires may be connected to the supporting member 3.

The hot wire air flow meter having the above exothermic resistor 1 free from a bobbin is disposed within a bypass air passage of the internal combustion engine. The above exothermic resistor 1 free from a bobbin is used as an air flow velocity measuring element 1A and as an air temperature measuring element 1B with the same structure member. The air temperature measuring element 1B consitutes of one of the components in the hot wire air flow meter.

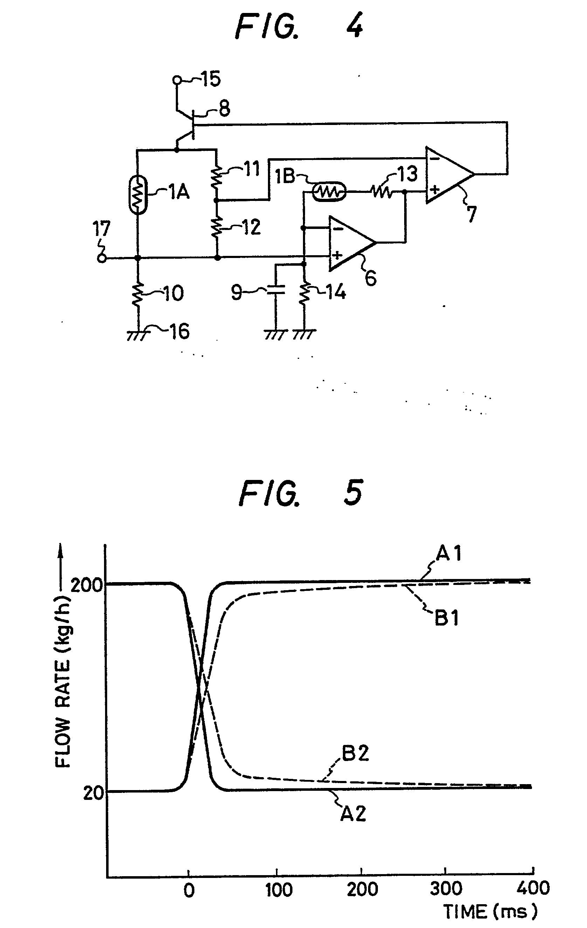

As shown in Fig. 3, the hot wire air flow meter having the air flow velocity measuring element 1A as a hot wire element and the air temperature measuring element 1B as a cold wire element is disposed in a bypass air passage 102 of the internal combustion engine. A body 103 of the internal combustion engine has a main air passage 101 and the bypass air passage 102 being branched from the main air passage 101. Most parts of the intake air passes through the main air passage 101 and the part of the intake air bypasses through the bypass air passage 102.

An electrical driving circuit of the hot wire air flow meter is illustrated in Fig. 4. The electric driving circuit is constituted by the air flow velocity measuring element 1A, the air temperature measur-

ing element 1B, operational amplifiers 6 and 7, a power transistor 8, a condensor 9, and resistances 10, 11, 12, 13 and 14. A collector terminal of the power transistor 8 connnects to a plus pole of a battery, and an earth terminal of the resistance 10 connects to a minus pole of the battery, respectively. A connection junction 17 between the resistance 10 and the air flow velocity measuring element 1A connects to an input terminal of a microprocessor. The microprocessor controls the internal combustion engine utilizing an output of the hot wire air flow meter.

In above electric driving circuit, the power transistor 8 supplies an electric current to the air flow velocity measuring element 1A and thereby the air flow velocity measuring element 1A is heated. The temperature of the air flow velocity measuring element 1A is controlled at all times at a predetermined temperature, which is higher than that of the temperature of the air temperature measuring element 1B. At this time, the air temperature measuring element 1B is conducted only microcurrent, in which the quantity of the exothermic heat is neglegible small, and detects an intake air temperature. Such an air temperature measuring element 1B is used as an intake air temperature compensating member.

When the air flow contacts to the air flow velocity measuring element 1A, a temperature difference between the air flow velocity measuring element 1A and the air temperature measuring element 1B is controlled at all times at a predetermined value by the operation of the electric driving circuit.

The above operation in the electric driving circuit acts to give a feedback function so as to equalize at all times the voltage which is difference voltage between one end side of the air flow velocity measuring element 1A and another end side thereof devided by resistances 11 and 12, and other voltage which is voltage drop of the resistance 10 being amplified by the operation amplifier 7. The voltage drop of the resistance 10 is caused by the electric current flowing the air flow velocity measuring element 1A.

When the amount of air flow varies, the electric current flowing the air velocity measuring element 1A also varies. Therefore, the amount of the air flow can be measured according to the voltage drop of the resistance 10 in response to the varied electric current.

By the adapting above construction of the hot wire air flow meter free from a bobbin of the present invention, the quantity of heat generated on the coiled platinum wire 2 of the air flow velocity measuring element 1A and the air temperature measuring element 1B hardly transmit through the supporting members 3 or lead wires, and is carried away almost through air.

In the above embodiment of the present invention, the quantities of heat for heating the bobbin and for carrying away through from the supporting members or lead wires via the bobbin, as shown in the flow meter having a bobbin, decreases widely. Accordingly, the transient response characteristics, for example when the amount of air flow changes suddenly, can be improved drastically.

The response characteristics of the hot wire air flow meter free from a bobbin of the embodiment of the present invention is illustrated in Fig. 5. The test practiced by means of a sonic test stand apparatus. The ouput voltage of the hot wire air flow meter converts into the flow amount under the condition the amount of air flow changed over.

In Fig. 5, curve A1 shows the hot wire air flow meter free from a bobbin of the present invention, and curve B1 shows the hot wire air flow meter having a bobbin, when the amount of air flow is changed over from low flow amount (about 20kg/h) to high flow amount (about 200kg/h). Curve A2 shows the hot wire air flow meter free from a bobbin of the present invention, and curve B2 shows the hot wire air flow meter having a bobbin, when the amount of air flow is changed over from high flow amount (about 200kg/h) to low flow amount (about 20kg/h). The hot wire air flow meter free from a bobbin of the present invention can be improved carry-over time for final value in comparison with the hot wire air flow meter having a bobbin as the prior art.

By the above improvement in the structure, even under the rapid acceleration and/or the rapid deceleration, the hot wire air flow meter free from a bobbin of the present invention can make an output signal comply with real change of the amount of air flow. Therefore, suitable injection amount of the injector can be determined and the problem of the surging phenomenon can be dissolved.

Further, as the structure of the exothermic resistor used as the air flow velocity measuring element and as the air temperature measuring element is simplified in the form of free from a bobbin, the productivity of the exothermic resistor can be improved and the exothermic resistor can be provided at low price.

So the outer surface of the coiled platinum wire is overcoated by the inorganic glass material member, the hot wire air flow meter of the present invention can be attained an excellent corrosion resistance. So both end sides of the coiled platinum wire are wound at lap winding, the hot wire air flow meter free from a bobbin of the present invention can be improved an excellent mechanical strength.

In the above embodiment of the present invention, the platinum wire is explained as one of the metal wire, however a tungsten wire can be applied and it can be expected to show same effects as described in the platinum wire.

## Claims

1. A hot wire air flow meter comprising an exothermic resistor (1; 1A, 1B) for measuring an amount of air flow disposed in a bypass air passage (102) of a body (103), an electric circuit for supplying an electric current to said exothermic resistor (1; 1A, 1B) and taking out a signal as an output voltage of said exothermic resistor (1; 1A, 1B) in correspondence with an amount of air flow, and said exothermic resistor (1; 1A, 1B) comprising a wire (2) of, for example, platinum, in a form of coil, coated with a glass material (4) on its outer surface, characterized in that the bobbin (18), on which said coil is wound, has been removed from said coil.

2. A hot wire air flow meter according to claim 1, characterized in that the coiled wire (2) of said exothermic resistor (1; 1A, 1B) is wound as a lap winding at both ends thereof, and the lap winding portions of the coiled platinum wire (2) of said exothermic resistor (1; 1A, 1B) are welded to supporting members (3) or lead wires.

3. A hot wire air flow meter according to claim 1 or 2, characterized in that said exothermic resistor (1; 1A, 1B) is an air flow velocity measuring element (1A) and a further exothermic resistor of the same construction acts as an air temperature measuring resistor (1B).

4. A hot wire air flow meter according to any one of claims 1 to 3, characterized in that said wire (2) is composed of tungsten.

5. A method of producing a hot wire air flow meter comprising an exothermic resistor (1; 1A, 1B) for measuring an amount of air flow disposed in a by-pass air passage (102) of a body (103), and an electric circuit for supplying an electric current to said exothermic resistor (1; 1A, 1B) and taking out a signal as an output voltage of said exothermic resistor (1; 1A, 1B) in correspondence with an amount of air flow, said method comprising the steps of winding a wire (2) of, for example, platinum in the form of coil on a bobbin (18), coating the outer surface of said coil with a glass material (4) and baking the glass material (4), characterized by removing the bobbin (18) by dissolving it with acid.

6. A method according to claim 5, characterized in that after the wire (2) winding step, the coiled wire (2) with the bobbin (18), are cut to the required length.

7. A method according to claim 5, characterized in that the coiled wire (2) winding step for said exothermic resistor (1; 1A, 1B) includes lap winding at both ends of the coiled wire (2) of said exothermic resistor (1; 1A, 1B).

8. A method according to claim 5, characterized in that in the coating step the ends of the coiled wire (2) of said exothermic resistor (1; 1A, 1B) are not coated.

9. A method according to claim 5, characterized in that after removing said bobbin (18) said exothermic resistor (1; 1A, 1B) is welded to a supporting member (3) at both ends.

10. A method according to claim 5, characterized in that as the bobbin (18) a molybdenum wire is used.

11. A method according to claim 5, characterized in that as the acid a mixed acid composed of nitric acid and sulfuric acid is used.

**Patentansprüche**

1. Hitzdraht-Luftstrommeßgerät mit einem exothermen Widerstand (1; 1A, 1B) zum Messen einer Luftstrommenge, der in einem Nebenleitungs-Luftkanal (102) eines Körpers (103) angeordnet ist, einem elektrischen Kreis zum Zuführen eines elektrischen Stroms zum exothermen Widerstand (1; 1A, 1B) und Ableiten eines Signals als einer Ausgangsspannung des exothermen Widerstands (1; 1A, 1B) entsprechend einer Luftstrommenge, wobei der exotherme Widerstand (1; 1A, 1B) einen Draht (2) aus beispielsweise Platin in Form einer Wendel aufweist, die an ihrer äußeren Oberfläche mit einem Glasmaterial (4) überzogen ist, dadurch gekennzeichnet, daß der Spulenkern (18), auf den die Wendel gewickelt wird, von der Wendel entfernt worden ist.

2. Hitzdraht-Luftstrommeßgerät nach Anspruch 1, dadurch gekennzeichnet, daß der gewendelte Draht (2) des exothermen Widerstands (1; 1A, 1B) an seinen beiden Enden als Schleifenwicklung gewickelt ist und die Schleifenwicklungsteile des gewendelten Platindrahts (2) des exothermen Widerstands (1; 1A, 1B) mit Trägerteilen (3) oder Zuführdrähten verschweißt sind.

3. Hitzdraht-Luftstrommeßgerät nach Anspruch 1 oder 2, dadurch gekennzeichnet, daß der exotherme Widerstand (1; 1A, 1B) ein Luftstrom-Geschwindigkeitsmeßelement (1A) ist und ein weiterer exothermer Widerstand des gleichen Aufbaus als Lufttemperatur-Meßwiderstand (1B) wirkt.

4. Hitzdraht-Luftstrommeßgerät nach einem der Ansprüche 1 bis 3, dadurch gekennzeichnet, daß der Draht (2) aus Wolfram besteht.

5. Verfahren zur Herstellung eines Hitzdraht-Luftstrommeßgeräts mit einem exothermen Widerstand (1; 1A, 1B) zum Messen einer Luftstrommenge, der in einem Nebenleitungs-Luftkanal (102) eines Körpers (103) angeordnet ist, und einem elektrischen Kreis zum Zuführen eines elektrischen Stroms zum exothermen Widerstand (1; 1A, 1B) und Ableiten eines Signals als einer Ausgangsspannung des exothermen Widerstands (1; 1A, 1B) entsprechend einer Luftstrommenge, welches Verfahren die Schritte des Wickelns eines Drahts (2) aus beispielsweise Platin in der Form einer Wendel auf einen Spulenkern (18), des Überziehens der äußeren Oberfläche der Wendel mit einem Glasmaterial (4) und des Ausbackens des Glasmaterials (4) aufweist, gekennzeichnet durch Entfernen des Spulenkerns (18) durch dessen Auflösung mit Säure.

6. Verfahren nach Anspruch 5, dadurch gekennzeichnet, daß nach dem Wicklungsschritt des Drahtes (2) der gewendelte Draht (2) mit dem Spulenkern (18) auf die erforderliche Länge geschnitten werden.

7. Verfahren nach Anspruch 5, dadurch gekennzeichnet, daß der Wicklungsschritt des gewendelten Drahtes (2) für den exothermen Widerstand (1; 1A, 1B) ein Schleifenwickeln an beiden Enden des gewendelten Drahtes (2) des exothermen Widerstands (1; 1A, 1B) umfaßt.

8. Verfahren nach Anspruch 5, dadurch gekennzeichnet, daß beim Überzugsschritt die Enden des gewendelten Drahtes (2) des exothermen Widerstands (1; 1A, 1B) nicht überzogen werden.

9. Verfahren nach Anspruch 5, dadurch gekennzeichnet, daß der exotherme Widerstand (1; 1A, 1B) nach dem Entfernen des Spulenkerns (18) an beiden Enden mit einem Trägerteil (3) verschweißt wird.

10. Verfahren nach Anspruch 5, dadurch gekennzeichnet, daß als der Spulenkern (18) ein Molybdändraht verwendet wird.

11. Verfahren nach Anspruch 5, dadurch gekennzeichnet, daß als die Säure eine aus Salpetersäure und Schwefelsäure gemischte Säure verwendet wird.

## Revendications

1. Débitmètre d'air à fil chaud comportant une résistance exothermique (1; 1A, 1B) servant à mesurer une grandeur d'un écoulement d'air et disposée dans un passage d'air de dérivation (102) d'un corps (103), un circuit électrique servant à envoyer un courant électrique à ladite résistance exothermique (1; 1A, 1B) et prélevant un signal en tant que tension de sortie de ladite résistance exothermique (1; 1A, 1B) en correspondance avec une grandeur de l'écoulement d'air, et ladite résistance exothermique (1; 1A, 1B) comprenant un fil (2), formé par exemple par du platine, en forme de bobine et dont la surface extérieure est recouverte par du verre (4), caractérisé en ce que le mandrin (18), sur lequel ladite bobine est enroulée, a été retiré de cette dernière.

2. Débitmètre d'air à fil chaud selon la revendication 1, caractérisé en ce que le fil bobiné (2) de ladite résistance exothermique (1; 1A, 1B) est enroulé sous la forme d'un enroulement imbriqué à ses deux extrémités, et que les parties d'enroulement imbriqué du fil de platine enroulé (2) de ladite résistance exothermique (1; 1A, 1B) sont soudées à des éléments de support (3) ou à des fils conducteurs.

3. Débitmètre d'air à fil chaud selon la revendication 1 ou 2, caractérisé en ce que ladite résistance exothermique (1; 1A, 1B) est un élément (1A) de mesure de la vitesse de l'écoulement de l'air et qu'une autre résistance exothermique possédant la même constitution sert de résistance (1B) de mesure de la température de l'air.

4. Débitmètre d'air à fil chaud selon l'une quelconque des revendications 1 à 3, caractérisé en ce que ledit fil (2) est constitué par du tungstène.

5. Procédé pour fabriquer un débitmètre d'air à fil chaud comportant une résistance exothermique (1; 1A, 1B) servant à mesurer une grandeur d'un écoulement d'air et disposée dans un passage d'air de dérivation (102) d'un corps (103), un circuit électrique servant à envoyer un courant électrique à ladite résistance exothermique (1; 1A, 1B) et prélevant un signal en tant que tension de sortie de ladite résistance exothermique (1; 1A, 1B) en correspondance avec une grandeur de l'écoulement d'air, ledit procédé incluant les étapes consistant à enrouler un fil (2) formé par exemple de platine, sous la forme d'une bobine, sur un mandrin (18), recouvrir la surface extérieure de ladite bobine avec du verre (4) et faire cuire le verre (4), caractérisé en ce qu'on élimine le mandrin (18) en le dissolvant avec de l'acide.

6. Procédé selon la revendication 5, caractérisé en ce qu'après l'étape d'enroulement du fil (2), on découpe le fil bobiné (2) ainsi que le mandrin (18) à la longueur requise.

7. Procédé selon la revendication 5, caractérisé en ce que l'étape d'enroulement du fil bobiné (2) pour ladite résistance exothermique (1; 1A, 1B) inclut l'exécution d'un enroulement imbriqué aux deux extrémités du fil bobiné (2) de ladite résistance exothermique (1; 1A, 1B).

8. Procédé selon la revendication 5, caractérisé en ce que, lors de l'étape de recouvrement, on ne recouvre pas les extrémités du fil bobiné (2) de ladite résistance exothermique (1; 1A, 1B).

9. Procédé selon la revendication 5, caractérisé en ce qu'après l'élimination dudit mandrin (18), on soude ladite résistance exothermique (1; 1A, 1B) à un élément de support (3), à ses deux extrémités.

10. Procédé selon la revendication 5, caractérisé en ce qu'on utilise, comme mandrin (18), un fil de molybdène.

11. Procédé selon la revendication 5, caractérisé en ce qu'on utilise, comme acide, un acide mixte constitué d'acide nitrique et d'acide sulfurique.

# FIG. 1

# FIG. 3

FIG. 2a

18

FIG. 2b

18    2

FIG. 2c

18    2

FIG. 2d

4    18    2

FIG. 2e

4    2    1

*FIG. 4*

*FIG. 5*